# DEMANDE DE BREVET EUROPEEN

(11) **EP 0 860 641 A1**
(43) Date de publication de la demande: **26.08.1998**
(21) Numéro de dépôt: 98400435.8
(22) Date de dépôt: 23.02.1998
(51) Int. Cl.: F16L 33/08, F16L 35/00

(54) **Dispositif de protection pour collier de serrage de tuyau souple**

(30) Priorité: 25.02.1997 FR 9702219
(71) Demandeur: Sevylor International, 92130 Issy-les-Moulineaux (FR)
(72) Inventeur: Marbach, Gérard, 68700 Cernay (FR)
(74) Mandataire: Gorrée, Jean-Michel

(57) **Abrégé**

Dispositif de protection pour un collier métallique (1) de serrage d'un tuyau souple, ledit collier (1) comportant une bande métallique souple (2) munie, vers une première de ses extrémités, d'un organe de serrage (3), notamment à vis (5), en saillie radiale par rapport à la bande (2) et apte à coopérer avec la seconde extrémité libre (6) de la bande pour déplacer celle-ci et serrer ainsi le collier autour du tuyau, caractérisé en ce qu'il comprend un capot protecteur (7) conformé pour coiffer ledit organe de serrage (3) et au moins une zone de la bande métallique adjacente à celui-ci, ledit capot protecteur étant constitué sans angles vifs, ce grâce à quoi le capot protecteur (7) recouvre l'organe (3) et la seconde extrémité (6) de la bande métallique (2) saillant hors dudit organe de serrage (3) lorsque le collier (1) est serré sur le tuyau.

## Description

La présente invention concerne un dispositif de protection pour un collier métallique de serrage d'un tuyau souple, ledit collier comportant une bande métallique souple munie, vers une première de ses extrémités, d'un organe de serrage, notamment à vis, en saillie radiale par rapport à la bande et apte à coopérer avec la seconde extrémité libre de la bande pour déplacer celle-ci et serrer ainsi le collier autour du tuyau.

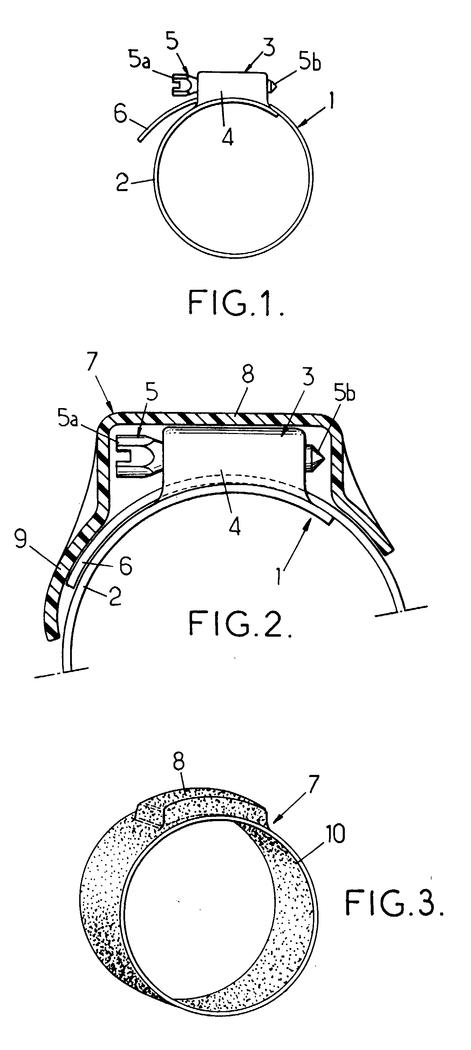

La figure 1 des dessins annexés représente très schématiquement, en vue de côté, un exemple d'un collier de serrage couramment disponible dans le commerce. Le collier 1, métallique, comporte une bande métallique souple 2 équipée, à une première extrémité, d'un organe de serrage désigné dans son ensemble par la référence numérique 3. L'organe de serrage 3 est constitué par un pontet métallique en forme de capot 4 qui supporte intérieurement une vis d'entraînement 5 formant vis sans fin apte à engrener avec des encoches ou lumières transversales (non visibles sur la figure 1) prévues dans la bande 2, la seconde extrémité de la bande 2 étant engagée dans un tunnel prévu à la base du pontet 3 de manière à former une boucle de diamètre ajustable à l'aide de la vis 5.

De tels colliers de serrage sont connus depuis longtemps et donnent toute satisfaction dans les nombreux modes de réalisation auxquels ils ont donné lieu.

Toutefois, ces colliers présentent des aspérités saillantes anguleuses (pontet 3 ; extrémités de la vis 5 saillant hors du pontet : tête 5a, bout 5b) ou coupantes (seconde extrémité 6 de la bande métallique 2 qui dépasse hors du pontet 2 sans être plaquée contre la partie enroulée de ladite bande).

Il peut en résulter des blessures, notamment lorsque le tuyau souple ainsi équipé repose à terre en un endroit où des personnes, et en particulier des enfants, marchent pieds nus : c'est le cas par exemple pour les tuyaux d'alimentation ou d'évacuation d'eau de piscines de jardins.

L'invention a donc essentiellement pour objet de remédier à cet inconvénient de manière que les colliers de serrage métalliques ne puissent plus constituer une cause de blessures, sans qu'il en résulte une quelconque modification de la structure du collier ni de son efficacité fonctionnelle.

A cette fin, il est proposé un dispositif de protection qui, étant agencé conformément à l'invention, se caractérise essentiellement en ce qu'il comprend un capot protecteur constitué sans angles vifs et conformé pour coiffer ledit organe de serrage et au moins la zone de la bande métallique adjacente à celui-ci où s'étend la seconde extrémité de la bande émergeant du ponte de l'organe de serrage, ce grâce à quoi le capot protecteur recouvre l'organe et la seconde extrémité de la bande métallique saillant hors dudit organe de serrage lorsque le collier est serré sur le tuyau.

Un tel dispositif peut, de façon économique, être constitué en matière synthétique semi-rigide : fabriqué par moulage, il peut présenter des angles arrondis, ou au moins adoucis, et sa semi-rigidité le rend moins agressif.

Ce dispositif peut être fixé sur le collier par tous moyens appropriés, par exemple par encliquetage en prévoyant des ergots adéquates.

Toutefois il semble qu'un mode de réalisation beaucoup plus avantageux consiste à faire en sorte que le capot protecteur appartienne à une bague propre à entourer étroitement le collier de serrage. Dans ce cas, l'ensemble de la bague est constituée en ladite matière synthétique semi-rigide et cette matière peut avantageusement présenter une caractéristique de déformabilité élastique.

Cette bague ou bracelet peut certes être constituée sous forme intégrale et être mise en place, par-dessus le collier serré sur le tuyau, en la déformant élastiquement radialement. Toutefois, cela nécessite sa mise en place préalable sur le tuyau avant la fixation de celui-ci sur son embout de réception, puis, après montage du collier de serrage, le positionnement de ladite bague par-dessus ce dernier par une manipulation qui n'est pas aisée.

Ainsi semble-t-il plus avantageux que le dispositif de protection soit constitué, de même que le collier de serrage, sous forme d'un ruban allongé dont une première extrémité est pourvue du susdit capot protecteur saillant. De préférence, la seconde extrémité du ruban allongé est munie d'une lumière propre à coiffer l'organe de serrage du collier pour ancrer ladite seconde extrémité du ruban allongé sur le collier, de sorte que le ruban est tout d'abord ancré sur l'organe de serrage du collier par sa seconde extrémité, puis enroulé et serré autour du collier de serrage, et enfin le capot protecteur est emboîté sur l'organe de serrage du collier. Pour parfaire cet accrochage et éviter un déboîtement indésiré, on peut faire en sorte que le capot protecteur soit muni intérieurement de languettes rabattables propres à s'appuyer sur les extrémités de l'organe de serrage du collier et à retenir par friction le capot en position enboîtée sur l'organe de serrage.

Pour faciliter la manipulation du dispositif tel qu'il vient d'être décrit, on peut avantageusement prévoir que la première extrémité du ruban allongé soit munie, en avant du capot protecteur, d'une patte de préhension.

Grâce aux dispositions conformes à l'invention qui sont indiquées ci-dessus, on constitue un dispositif de protection prémunissant contre les dangers de blessures susceptibles d'être provoquées par les aspérités agressives du collier de serrage, lequel dispositif de protection est facile et peu coûteux à fabriquer, est facile à positionner et n'est pas encombrant.

L'invention sera mieux comprise à la lecture de la description détaillée qui suit de certains modes de réalisation donnés uniquement à titre d'exemples nullement limitatifs. Dans cette description on se réfère aux dessins annexés sur lesquels :
- la figure 2 est une vue schématique partiellement en coupe de coupe d'un dispositif de protection agencé conformément à l'invention, montré en position fonctionnelle sur un collier de serrage ;
- la figure 3 est une vue en perspective d'un autre mode de réalisation d'un dispositif de protection conforme à l'invention ;
- la figure 4 est une vue en perspective d'encore un autre mode de réalisation, préféré, d'un dispositif de protection conforme à l'invention montré en position non fonctionnelle ;
- les figures 51 et 5B sont des vues partielles, respectivement en coupe et en vue de dessous, du dispositif de protection de la figure 4 illustrant un détail de réalisation particulièrement avantageux ; et

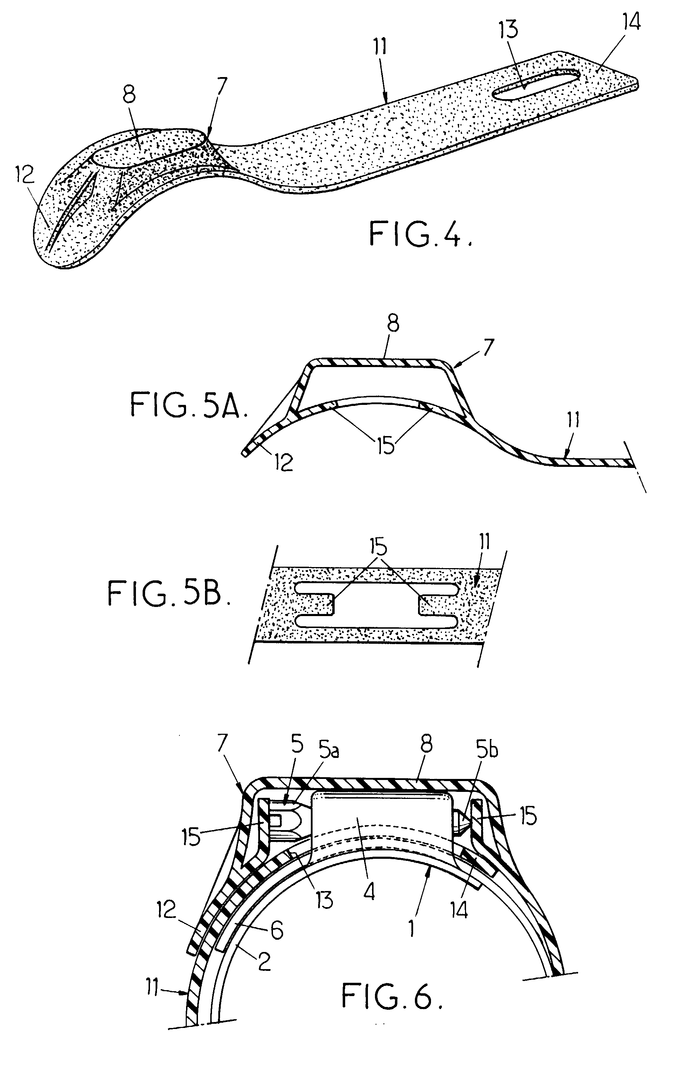

- la figure 6 est une vue partielle, partiellement en coupe, du dispositif de protection de la figure 4 équipé du perfectionnement de la figure 5, montré, en coupe, en position fonctionelle sur un collier de serrage.

En se reportant tout d'abord à la figure 2, on prévoit d'associer au collier 1 un capot protecteur 7 conformé pour coiffer l'organe de serrage 3 ainsi qu'une zone de la bande métallique 2 adjacente à ce dernier, savoir la zone dans laquelle est susceptible de s'étendre l'extrémité libre 6 de ladite bande qui émerge hors de l'organe de serrage 3.

Ainsi comme montré à la figure 2, le capot protecteur 7 présente une partie en dôme 8 recouvrant l'organe de serrage 3 et protégeant, notamment, les parties acérées de celui-ci (tête de vis 5a, pointe de vis 5b qui émergent hors du pontet 4). A cette partie en dôme 8 est adjointe une partie en forme de bande incurvée 9, s'étendant à partir de la base de la partie en forme de dôme 8 et ayant une largeur au moins égale à celle de la bande 2, 6 sous-jacente. Eventuellement, la partie en forme de bande incurvée 9 peut posséder deux petites ailes latérales (non montrées) saillant radialement vers l'intérieur de la courbure qui servent de butées latérales de retenue des bandes 2, 6 sous-jacentes.

Le capot protecteur 7 est constitué sans angles vifs, et peut être réalisé par moulage en une matière plastique semi-souple dont la relative flexibilité adjointe à l'absence d'angle vif, contribue à éviter les blessures.

Un capot protecteur 7 tel que décrit ci-dessus peut être fixé sur le collier de serrage 1 par encliquetage en prévoyant par exemple des ergots propres à coopérer avec le pontet et/ou le collier. Toutefois, une telle solution, bien que techniquement réalisable, ne paraît pas très satisfaisante sur le plan de la solidité de la fixation ainsi réalisée.

Il paraît donc souhaitable de concevoir le capot protecteur 7 en association avec d'autres moyens plus efficaces.

A la figure 3, le capot protecteur 7 est incorporé dans une bague ou bracelet 10 qui est réalisé dans une matière synthétique présentant une caractéristique de relative élasticité de manière à permettre la mise en place du dispositif sur le tuyau et, de là, sur le collier 1 qu'il enserre alors de façon élastique. Autrement dit, la partie en forme de bande incurvée 9 du dispositif 7 de la figure 2 est prolongé pour rejoindre la base de la partie en forme de dôme 8 à l'autre extrémité de celle-ci.

Toutefois, la réalisation du dispositif de protection de la figure 3 nécessite l'emploi d'un matériau synthétique qui présente des caractéristiques de déformabilité élastique relative pour le bracelet 10 et de rigidité relative pour le capot 8. Bien qu'une telle solution ne présente pas d'impossibilité technique, elle peut toutefois s'avérer relativement coûteuse tant pour le coût du matériau utilisé que pour le coût du processus de fabrication.

Une solution beaucoup plus simple à tous points de vue (fabrication, utilisation) et moins onéreuse, et qui à ce titre est actuellement une solution préférée, consiste à réaliser le dispositif sous forme d'un bracelet ouvert ou d'un ruban allongé comme illustré à la figure 4.

Le ruban allongé 11 est réalisé en matière plastique semi-rigide lui procurant la souplesse relative permettant sa mise en place autour du collier de serrage 1 comme expliqué plus loin. Au voisinage d'une première de ses extrémités, le ruban allongé 11 est conformé pour constituer le capot protecteur 7 avec sa partie en forme de dôme 8. Pour faciliter la manipulation du dispositif, le ruban allongé 11 peut avantageusement présenter, au-delà de la partie en forme de dôme 8, une languette terminale de préhension 12.

A son extrémité opposée ou seconde extrémité 14, le ruban allongé 11 est muni d'une lumière oblongue 13 dont les dimensions sont au moins égales à celles correspondantes de l'organe de serrage 3 du collier 1 qu'il doit équiper.

Pour l'installation du dispositif de protection sur le collier 1, on commence par disposer la seconde extrémité sur l'organe de serrage 3 du collier, la lumière 13 étant traversée par le pontet 4 comme illustré à la figure 6. Puis, le ruban allongé 11 étant enroulé et tendu autour du collier 1 en emprisonnant l'extrémité libre 6 de celui-ci, le capot est disposé sur l'organe de serrage 3 en coiffant celui-ci. Le ruban allongé 11 peut présenter une variation dimensionnelle en largeur et/ou en épaisseur sur une aprtie de sa longueur, qui est propre à lui conférer une relative élasticité contribuant à lui faire épouser étroitement le contour du collier de serrage et le bloquant élastiquement par ses extrémités sur l'organe de serrage du collier.

Pour éviter un déboîtement intempestif du capot 8, il est souhaitable de lui associer des moyens de retenue qui peuvent avantageusement, de façon simple et sans surcoût, consister en deux languettes pliables 15 prolongeant le ruban allongé 11 sous le capot 8, comme illustré aux figures 5A et 5B. Lorsque le capot 8 est enfoncé sur l'organe de serrage 3 (fig. 6), les deux languettes 15 sont repliées vers l'intérieur et appuient élastiquement contre les extrémités de l'organe de serrage 3, ce qui suffit à maitnenir par friction le capot 8 en place.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes.

## Revendications

1. Dispositif de protection pour un collier métallique (1) de serrage d'un tuyau souple, ledit collier (1) comportant une bande métallique souple (2) munie, vers une première de ses extrémités, d'un organe de serrage (3), notamment à vis (5), en saillie radiale par rapport à la bande (2) et apte à coopérer avec la seconde extrémité libre (6) de la bande pour déplacer celle-ci et serrer ainsi le collier autour du tuyau,
caractérisé en ce qu'il comprend un capot protecteur (7) conformé pour coiffer ledit organe de serrage (3) et au moins une zone de la bande métallique adjacente à celui-ci, ledit capot protecteur étant constitué sans angles vifs, ce grâce à quoi le capot protecteur (7) recouvre l'organe (3) et la seconde extrémité (6) de la bande métallique (2) saillant hors dudit organe de serrage (3) lorsque le collier (1) est serré sur le tuyau.

2. Dispositif de protection selon la revendication 1, caractérisé en ce que le capot protecteur (7) appartient à une bague (10) propre à entourer étroitement le collier de serrage.

3. Dispositif de protection selon la revendication 1 ou 2, caractérisé en ce que le capot protecteur (7) est constitué en une matière synthétique semi-rigide.

4. Dispositif de protection selon les revendications 2 et 3, caractérisé en ce que l'ensemble de la bague est constituée en ladite matière synthétique semi-rigide et en ce que cette matière présente une caractéristique de déformabilité élastique.

5. Dispositif de protection selon l'une quelconque des revendications 2 à 4, caractérisé en ce qu'il est constitué sous forme d'un ruban allongé (11) dont une première extrémité est pourvue du susdit capot protecteur saillant (7).

6. Dispositif de protection selon la revendicaion 5, caractérisé en ce que la seconde extrémité (14) du ruban allongé (11) est munie d'une lumière (13) propre à coiffer l'organe de serrage (3) du collier (1) pour ancrer ladite seconde extrémité (14) du ruban allongé (11) sur le collier (1).

7. Dispositif de protection selon l'une quelconque des revendications précédentes, caractérisé en ce que le capot protecteur (7) est muni intérieurement de languettes rabattables (15) propres à s'appuyer sur les extrémités de l'organe de serrage (3) du collier (1).

8. Dispositif de protection selon l'une quelconque des revendications 5 à 7, caractérisé en ce que la première extrémité du ruban allongé (11) est munie, en avant du capot protecteur (7), d'une patte de préhension (12).
